Europäisches Patentamt

European Patent Office

Office européen des brevets

(19)

(11) Veröffentlichungsnummer: 0 213 254

A2

(12) **EUROPÄISCHE PATENTANMELDUNG**

(21) Anmeldenummer: 86100269.9

(22) Anmeldetag: 10.01.86

(51) Int. Cl.⁴: **B 29 C 51/42**
**B 29 C 69/02**

(30) Priorität: 10.08.85 DE 3528810

(43) Veröffentlichungstag der Anmeldung:
11.03.87 Patentblatt 87/11

(84) Benannte Vertragsstaaten:
AT BE CH DE FR GB IT LI LU NL SE

(71) Anmelder: Firma Carl Freudenberg
Höhnerweg 4
D-6940 Weinheim/Bergstrasse(DE)

(72) Erfinder: Scholz, Hans-Günter, Dr.
Drittelsgasse 8
D-6945 Grosssachsen(DE)

(72) Erfinder: Graab, Gerhard, Dr.
Nibelungenring 41
D-6800 Mannheim 24(DE)

(74) Vertreter: Weissenfeld-Richters, Helga, Dr.
Höhnerweg 2
D-6940 Weinheim/Bergstrasse(DE)

(54) Verfahren zur Herstellung eines tiefgezogenen Formteiles aus teilkristallinem Werkstoff.

(57) Verfahren zur Herstellung eines tiefgezogenen Formteiles aus teilkristallinem Werkstoff, bei dem der Werkstoff in die Gestalt einer Folie überführt wird und nach der Erwärmung auf eine Temperatur unterhalb des Kristallit-Schmelzpunktes mit einer Überflächenprägung versehen und anschließend tiefgezogen wird, bei dem der geprägte Werkstoff abgekühlt, vernetzt und nach einer erneuten Erwärmung auf eine Temperatur oberhalb des Kristallit-Schmelzpunktes tiefgezogen wird.

EP 0 213 254 A2

**Dr. H. Weissenfeld-Richters**

Patentanwältin

Höhnerweg 2-4
6940 Weinheim/Bergstraße
Telefon (0 62 01) 80-86 18
Telex 465531  **0213254**

8. Januar 1986

Mo/Sch

ON 5046/Europa

1

Anmelderin: Firma Carl Freudenberg, Weinheim

Verfahren zur Herstellung eines tiefgezogenen Formteiles aus teilkristallinem
Werkstoff

Die Erfindung betrifft ein Verfahren zur Herstellung
eines tiefgezogenen Formteiles aus einem teilkristallinen Werkstoff, bei dem der Werkstoff in die Gestalt
einer Folie überführt und nach Erwärmung auf eine
Temperatur unterhalb des Kristallitschmelzpunktes
mit einer Oberflächenprägung versehen und anschließend
tiefgezogen wird.

Tiefgezogene Formteile der genannten Art dienen zur
Gestaltung der Fahrzeug-Innenräume von Kraftfahrzeugen
und werden überwiegend aus Folienbahnen hergestellt.
Diese bestehen im wesentlichen aus Polyvinylchlorid
oder aus Gemischen von Acrylnitril-Butadien-Styrol-
Copolymersisaten (ABS) mit Polyvinylchlorid und sind
als Einschicht-Folien oder Verbundfolien in einer
Dicke zwischen 500 µm und 1.400 µm, vorzugsweise einer
Dicke von 600 µm bis zu 1.200 µm, in Gebrauch. Dabei
sind verschiedene Modifikationen aus Weich-PVC oder
Hart-PVC bekannt. Die Folien haben verschiedene Nachteile.

Bei weichmacherhaltigen Folien tritt durch Emigration
des Weichmachers und anschließende Kondensation an
der Windschutzscheibe das sogenannte "Fogging" auf
sowie eine allmähliche Verringerung der Dehnungswerte,
eine Verschlechterung des Tiefziehverhaltens, der Kälteflexibilität und des Wärmealterungsverhaltens.

Weichmacherfreie Folien aus ABS und Hart-PVC besitzen
den Nachteil einer zu großen Steifigkeit und einer
geringen Kälteflexibilität.

Es ist bekannt, daß die Nachteile der beschriebenen,
weichmacherhaltigen PVC-Folien bei steigender Gebrauchstemperatur zunehmen und daß die Meßwerte für "Fogging",
Ozonbeständigkeit, Dehnung, Lichtstabilität und Wärmealterungsbeständigkeit mit steigender Temperatur eine
zunehmende Verschlechterung aufweisen.

Dennoch besteht zur Zeit in der Kraftfahrzeugindustrie,
insbesondere bei der Entwicklung von Personenkraftwagen
der Trend, den Luftwiderstandsbeiwert aus Gründen
der Treibstoffersparnis möglichst niedrig zu gestalten.
Das führt unter anderem dazu, daß die Frontscheibe
moderner Kraftfahrzeuge einen sehr flachen Neigungswinkel
aufweist. Die durch Sonneneinstrahlung hervorgerufene
Aufheizung des Fahrgastinnenraumes und insbesondere
der Armaturenbrettverkleidung ist dadurch wesentlich
ausgeprägter als bisher und hat zu einer wesentlichen
Verschärfung der angesprochenen Problematik geführt.

Ziel der bisherigen Entwicklungen ist es demzufolge
gewesen, die bekannten Nachteile der weichmacherhaltigen
PVC-Folien zu vermeiden und eine tiefziehfähige Folie
vorzuschlagen, die verbesserte Eigenschaften aufweist,
wie beispielsweise eine verbesserte Alterungsbeständigkeit, einen höheren Weichheitsgrad ohne das Auftreten
von Fogging, keinen oder nur einen verminderten Abbau
der Dehnungswerte während der gesamten Gebrauchsdauer,
eine gute Lichtstabilität sowie eine hohe Wärme- und
Ozonbeständigkeit bei verbessertem Tiefziehverhalten.

Die bekannten Vorschläge zur Lösung dieser Problematik
bedienen sich der Verwendung von herkömmlichen PVC-ABS-
Mischungen und versuchen die oben angesprochenen Probleme
durch Einmischung polymerer Plastifizierungsmittel
und anderer Modfizierungsharze zu beheben, wie beispielsweise von Styrol-Acrlynitril-Copolymerisat (SAN) und/oder
von Acrylnitril-Butadienharz (NBR).

Ein entsprechender Vorschlag ist beispielsweise aus
dem DE-GM 82 20 682 zu entnehmen.

Weiterhin ist es bekannt, daß teilkristalline polymere
Werkstoffe, wie z.B. Polypropylen, Ethylen-Propylen-
Dien-Copolymerisate (EPDM), Ethylen-Propylen-Mischpolymerisate (EPM) und Polyamide mit gutem Erfolg in der
Fahrzeugindustrie eingesetzt werden können. Diese
Werkstoffe werden bei unvulkanisierten Produkten im
Spritzguß- oder im Blasformverfahren zu Formteilen
verarbeitet, bei vulkanisierten oder vernetzten Produkten
unter Verwendung des Pressenverfahrens. Die Temperaturen
liegen dabei oberhalb des Kristallit-Schmelzpunktes.
Folien aus EPDM- und EPM-Copolymerisaten erfüllen
im vernetzten und unvernetzten Zustand einen Teil der
bestehenden Anforderungen und weisen eine gute Dehnungsfähigkeit, eine gute Alterungsbeständigkeit, eine gute
Lichtbeständigkeit, eine gute Kälteflexibilität, ein
geringes Fogging-Verhalten und eine gute Schlagfestigkeit
auf. Sie gelangen in der Verpackungsindustrie zur
Anwendung, wobei auch das Tiefziehverfahren zur Anwendung
gelangt.

Die Werkstofftemperatur während des Tiefziehvorganges
liegt stets unterhalb des Kristallit-Schmelzpunktes,
um eine Auflösung der Folie zu vermeiden. Die Verwendung
des Tiefziehverfahrens ist jedoch bei der Verarbeitung
dieser Werkstoffe in bezug auf die Herstellung von
geprägten Formteilen zur Auskleidung von Kraftfahrzeug-
Innenräumen bisher nicht bekannt geworden und auch
aus technischen Gründen äußerst problematisch.

Sie setzt nämlich die Verwendung eines Tiefziehwerkzeuges voraus, das selbst eine der gewünschten Prägung entsprechende Strukturierung der Oberfläche aufweist. Das bedingt außerordentlich hohe Werkzeugbeschaffungskosten sowie eine Erschwernis bei gegebenenfalls notwendig werdenden Werkzeugreparaturen. Außerdem müßte das Tiefziehverfahren zur Herstellung von Formteilen für den Kraftfahrzeug-Innenausbau vom fast ausschließlich üblichen Positiv-Verfahren in das kompliziertere Negativ-Verfahren umgewandelt werden. Die Herstellung von Formteilen mit sehr hohen Verstreckungsgraden und tiefen Hinterschneidungen wird dadurch erschwert bzw. unmöglich gemacht, was häufig den stilistischen Interessen der Designer widerspricht.

Darüber hinaus können die hohen Temperaturen, die bei modernen Fahrzeugtypen mit stark geneigter Windschutzscheibe im Bereich des Armaturenbrettes auftreten, bei Verwendung einer tiefgezogenen Folie aus teilkristallinem Werkstoff, die unterhalb des Kristallit-Schmelzpunktes verformt wurde, zu einer erheblichen Schrumpfung führen, wenn die Materialtemperaturen im eingebauten Zustand gleich oder ähnlich der Materialtemperatur während des Tiefziehvorganges sind. Derartige Schrumpferscheinungen können trotz der Hinterschäumung zu einer unerwünschten Deformierung des Armaturenbrettes führen.

Bei Formteilen, die aus einem Gemisch aus PVC und ABS
bestehen, versucht man das Problem zu lösen, indem man
bei der Mischungszusammensetzung einen Kompromiß zwischen
gutem Fließverhalten beim Tiefziehvorgang einerseits
und hoher Temperaturbeständigkeit und Härte der eingesetzten
Folie andererseits anstrebt.

Aus der DE-AS 31 07 907 ist es bekannt, daß Bahnen aus
teilkristallinen Kunststoffen, insbesondere aus EPDM oder
EPM Mischpolymerisaten partiell oder vollständig vernetzbar sind. Derartige vernetzte Materialien können verformt und durch "Einfrieren" fixiert werden. Dieses Verfahren wird bei der Herstellung von sogenannten Schrumpfartikeln angewendet, wobei man sich das "elastische Formgedächtnis" der vernetzten teilkristallinen Werkstoffe
zunutze machen möchte. Ein auf diese Art hergestellter
Schrumpfartikel schrumpft bei kurzer Erwärmung über den
Kristallitschmelzpunkt sehr schnell in seine ursprüngliche
Form und Abmessung zurück, was bei einem im Fahrzeuginnenbau zur Anwendung gelangenden tiefgezogenen Formteil
natürlich nicht erwünscht ist.

Der Erfindung liegt demzufolge die Aufgabe zugrunde, das
eingangs beschriebene Verfahren derart weiterzuentwickeln, daß sich eine sichere Vermeidung der genannten
Nachteile ergibt. Das erfindungsgemäße Verfahren soll
einfach durchführbar sein und die Erzeugung eines tiefgezogenen Formteiles aus einem teilkristallinen Werkstoff
zulassen, das bei einer Verwendung als Armaturenbrettverkleidung eines Kraftfahrzeuges allen dort auftretenden Belastungen ohne nachteilige Veränderung oder
Foggingbildung langfristig gut zu widerstehen vermag.
Diese Aufgabe wird mit den kennzeichnenden Merkmalen des
Patentanspruches gelöst. Auf vorteilhafte Ausgstaltungen
nehmen die Ansprüche 2 bis 3 Bezug.

Bei dem erfindungsgemäß vorgeschlagenen Verfahren wird
ebenso wie bei dem Verfahren nach dem Stande der Technik
zunächst eine Folie aus einem teilkristallinen Werkstoff
erzeugt, vorzugsweise aus EPDM oder EPM. Diese wird auf
eine Temperatur knapp unterhalb des Kristallit-Schmelzpunktes erwärmt und durch Prägen mit einer Oberflächenstrukturierung versehen, beispielsweise einer Ledernarbung. Die so erhaltene Folie wird abgekühlt und anschließend der Einwirkung einer energiereichen Strahlung
ausgesetzt, um eine Vernetzung zu erreichen. Nach einer
anschließenden Erwärmung auf eine Temperatur oberhalb
des Kristallit-Schmelzpunktes des verwendeten polymeren
Werkstoffes erfolgt schließlich die Umformung unter Anwendung des Tiefziehverfahrens. Dabei stellt man überraschend fest, daß die zuvor eingebrachte Prägung der
Oberflächen in ihrer Struktur erhalten bleibt, obwohl die
Materialtemperatur beim Tiefziehen höher ist als die
Materialtemperatur während des vorausgegangenen Prägevorganges. Zusätzlich ergibt sich der Vorteil, daß der Tiefziehvorgang wesentlich leichter zu kontrollieren und zu
steuern ist, weil die Verarbeitungsbedingungen in einem
vergrößerten Temperaturbereich nahezu konstant bleiben.

Die Unterschiede und die Vorteile der erfindungsgemäßen
Verfahrensweise im Vergleich zur herkömmlichen Verfahrensweise werden nachfolgend anhand des beigefügten Diagramms weiter erläutert.

Bei thermoplastischen Kunststoffen fällt der Elastizitätsmodul mit steigender Temperatur mehr oder weniger konstant
ab. Die Verformung des Materials durch Tiefziehen oder
Prägen erfolgt in einem Temperaturbereich, in dem das
Material einen niedrigen Elastizitätsmodul und dadurch
eine leichte Verformbarkeit besitzt. Diese Temperatur
wird nach oben begrenzt durch die Eigenfestigkeit des
Materials und dessen Temperaturbeständigkeit.

Aufgrund des "Erinnerungsvermögens" der Makromoleküle
und der Fähigkeit der thermoplastischen Kunststoffe zu
schmelzen, ist es notwendig, daß die Materialtemperatur
beim Prägen größer ist als die Materialtemperatur beim
Tiefziehen. Würde man diese Bedingung nicht einhalten,
dann würde die durch den ersten Verformungsvorgang erzeugte Strukturierung der Oberfläche bei der Durchführung
des zweiten Verformungsvorganges, dem Tiefziehen, weitgehend abgeschwächt oder ausgelöscht werden.

Teilkristalline Polymere können im unvernetzten Zustand
nur unterhalb des Kristallit-Schmelzpunktes als Folienbahn geprägt oder tiefgezogen werden, weil der Elastizitätsmodul oberhalb dieser Temperatur auf einer steilen
Kennlinie bis zum Erreichen des unbedeutenden Wertes
der relativ niedrig viskosen Schmelze abfällt. Vernetzte teilkristalline Polymere zeigen demgegenüber nach
einem anfänglich vergleichbar steilen Abfall des Elastizitätsmoduls überraschenderweise noch oberhalb des
Kristallit-Schmelzpunktes einen relativ konstanten
Wert in einem großen Temperaturbereich, was wahrscheinlich durch den Gehalt an vernetzten Molekülketten verursacht ist und dem Material bei den in Frage kommenden
Temperaturen einen gummielastischen, nicht schmelzbaren
Charakter verleiht.

Die Höhe des Elastizitätsmoduls oberhalb des Kritallit-Schmelzpunktes ist von der Höhe des Vernetzungsgrades des verwendeten Werkstoffes abhängig und läßt sich durch dessen Veränderung gezielt beeinflussen.

Obwohl die Temperatur beim Prägen niedriger und der Elastizitätsmodul höher ist als während des nachträglich durchgeführten Verformungsschrittes, dem Tiefziehvorgang, bleibt die durch die Prägung erzeugte Strukturierung der Oberfläche der Folie nach der Vernetzung und dem anschließenden Tiefziehen überraschenderweise erhalten. Es wird vermutet, daß durch die Vernetzung der Makromoleküle deren Neuorientierung oberhalb des Kristallit-Schmelzpunktes erschwert wird, und daß beim zweiten Verformungsschritt, dem Tiefziehen, lediglich das "Gerüst" der vernetzten Polymerketten gedehnt wird. Diese Vermutung wird bestärkt durch Versuchsreihen, in denen der Vernetzungsgrad modifiziert wurde.

Zur Vernetzung wurde im vorliegenden Falle ein Elektronenbeschleuniger mit einer Leistung von 1,5 MeV eingesetzt. Die Verwendung anderer energiereicher Strahlen als Vernetzungsinitiator ist ohne weiteres möglich.

In dem vorliegenden Beispiel (Tabelle 1) wurde die geprägte Folie mit einer Dosisleistung zwischen 20 und 100 kGy behandelt. Im erstgenannten Falle wurde eine zwar ausreichende Materialfestigkeit oberhalb des Kristallit-Schmelzpunktes erreicht, die ein zweites Verformen ermöglicht.

Die Anzahl der vernetzten Moleküle war jedoch offensichtlich noch nicht genügend hoch, wodurch sich eine
unbefriedigende Veränderung der eingeprägten Strukturierung der Oberfläche während des Tiefziehens ergab.

Im letztgenannten Falle resultierten offenbar zu
viele Vernetzungsstellen zwischen den Makromolekülen,
was zu einer starken Verminderung der Dehnbarkeit
während des Tiefziehvorganges führte sowie zu einem
Einreißen der Folie im Extremfall. Die geeignete Dosis
ist daher im Einzelfalle zu ermitteln, wobei die
spezifischen Werkstoffeigenschaften zu großen Abweichungen führen können. Werte zwischen 40 und 80 kGy führen
jedoch in aller Regel zu einem guten Ergebnis.

Trotz der Vernetzung hat die Materialtemperatur beim Prägevorgang noch einen Einfluß auf die Oberflächenstruktur
nach dem Tiefziehen. Ausgehend von der Kristallit-Schmelztemperatur wird mit abnehmender Prägetemperatur ein deutlich verschlechtertes Ergebnis erzielt, was darauf zurückzuführen sein dürfte, daß die Strahlenbehandlung bevorzugt, wenn nicht ausschließlich, zu einer Vernetzung der
durch das vorausgegangene Prägen thermoplastisch veränderten Molekülteile führt. Die nur thermoelastisch verformten
Anteile der Folie besitzen demgegenüber ein anderes
"Erinnerungsvermögen", nämlich dasjenige der ungeprägten
Folie.

Die Veränderungen der Materialtemperaturen beim Tiefziehen zeigen, daß die Temperaturen innerhalb eines
weiten Bereiches variiert werden können, ohne daß sich
dabei ein grundlegender Einfluß auf die Stabilität der
in die Oberfläche der Folie eingeprägten Struktur ergibt.

Zur Durchführung des erfindungsgemäßen Verfahrens können
Folien aus teilkristallinen, polymeren Werkstoffen verwendet werden, insbesondere solche auf Basis EPDM oder
EPM-Misch- und Copolymerisate. Diese können im Hinblick
auf spezifische Anforderungen modifiziert sein, beispielsweise im Hinblick auf die Erzielung einer bestimmten Shorehärte, auf Antifoggingverhalten, Elastizität, Alterungsbeständigkeit u.s.w. Die Kristallit-Schmelztemperaturen liegen in allen diesen Fällen oberhalb von
130 °C, zweckmäßig in dem Bereich zwischen 150 und 165 °C.
Eine beispielhafte Werkstoffzusammensetzung, die sich besonders gut für die Herstellung eines tiefgezogenen
und geprägten Formteiles zur Verwendung als Armaturenbrettverkleidung in einem modernen Kraftfahrzeug eignet,
wird nachfolgend angegeben:

        28,57 Gew.-Teile Ethylenpropylendienterpolymer
        42,86 Gew.-Teile Polypropylen (MFI 190/5 = 3)
        16,19 Gew.-Teile Phenylenoxid
        11,43 Gew.-Teile Styrol-Ethylen-Butylen-Styrol-
              Blockcopolymer
         0,95 Gew.-Teile Antioxidantien

Die Mischungsbestandteile werden in einem Extruder homogenisiert, plastifiziert und bei Temperaturen oberhalb 170 °C durch eine Breitschlitzdüse auf ein Glättwerk (Calandrette) ausgetragen. Die Folie wies eine Dicke von ca. 0,9 mm auf und wurde anschließend über Kühlwalzen geführt und aufgewickelt. Für die Versuche wurde in einem zweiten Schritt die Folie in einem IR-Strahlerfeld erhitzt und mit einer lederähnlichen Prägung geprägt. Die Materialoberflächentemperatur betrug ca. 155 °C, Prägegeschwindigkeit 5 m/min. Bei einer Serienfertigung ist ein Prägen in einem Arbeitsgang mit der Extrusion nach dem Glättwerk vor der Kühlung durchführbar. Die so hergestellte genarbte Folie wurde in einem Elektronenbeschleuniger mit einer Dosis von 60 kGy bestrahlt.

An der bestrahlten Folie wurden die in Tabelle 2 aufgeführten Meßwerte festgestellt. Ein Vergleich mit den zur Zeit gültigen technischen Lieferbedingungen der wichtigsten deutschen Automobilhersteller zeigt, daß die Folie vor allem in den mechanischen Werten vor und besonders nach Wärmealterung sowie nach Richtungsprüfungen die geforderten Werte erreicht und zum Teil deutlich übererfüllt.

Als Vernetzungsinitiator eignen sich im wesentlichen energiereiche Strahlen, insbesondere $\beta$-Strahlen aus Elektronenbeschleunigern.

**T A B E L L E  1**

| Prägetemp. °C | Dosis kGy | Tiefzieh Temp. °C | Ergebnis Narbung nach Tiefziehen |
|---|---|---|---|
| 135 | 50 | 175 | − |
| 140 | | | 0 |
| 150 | | | ++ |
| 155 | | | ++ |
| 160 | | | beim Prägen gerissen |
| 150 | 10 | 175 | nicht tiefziehfähig |
| | 20 | | − |
| | 50 | | ++ |
| | 70 | | ++ |
| | 100 | | verringertes Dehnungsverhalten |
| 150 | 50 | 160 | − |
| | | 170 | ++ |
| | | 175 | ++ |
| | | 180 | ++ |
| | | 190 | Oberfläche glänzt |
| | | 200 | Oberfläche verbrannt |

12 b          **0213254**

<u>T A B E L L E  2</u>

P R Ü F U N G E N
_____

<u>Meßwerte</u>

| | | |
|---|---|---|
| Flächengewicht | g/m² | 833 |
| Rohdichte | g/cm³ | 0,93 |
| Härte Shore | A/D | 92/45 |

Spannwert nach  20 %      100 %      300 % Dehnung

längs/quer  MPa 11,5/9,9   11,6/10,2   14,3/13,1

| | | |
|---|---|---|
| Zugfestigkeit | MPa | 23/18 |
| Dehnung | % | 453/398 |
| Weiterreißfestigkeit | N/mm | 36/36 |
| Zugfestigkeit nach 500 h, 120 °C, längs/quer | MPa | 19/17 |
| Dehnung nach 500 h, 120 °C, längs/quer | % | 402/353 |
| Zugfestigkeit nach Bewitterung 1000 h, 3 min. naß, 17 min. trocken | MPa | 15/14 |
| Dehnung nach Bewitterung 1000 h, 3 min. naß, 17 min. trocken | % | 303/296 |
| Dehnung nach 500 h Xenonbelichtung | % | 176/202 |
| Dehnung nach 336 h, 100 °C plus 500 h Xenonbelichtung | % | 312/336 |
| Biegefestigkeit längs/quer | N | 5/4 |
| Biegefestigkeit nach 500 h, 120 °C, längs/quer | N | 5/5 |
| Narbenbeständigkeit 5 min, 170 °C | keine erkennbare Veränderung | |
| Gewichtsverlust 5 min., 170 °C | % | 0,11 |
| Maßliche Veränderung 5 min., 170 °C längs/quer | % | − 3,9/ + 0,27 |
| Maßliche Veränderung 5 min., 90 °C längs/quer | % | − 0,7/ + 0,04 |
| Kugelfall nach 16 h bei −40 °C, DIN 53 443 | alle Proben unbeschädigt | |
| Brennverhalten MVSS-302 max. Geschwindigkeit | | 30,5 mm/min. |
| Farbechtheit nach 500 h, Xenon DIN 54001 | | 5 |
| Farbechtheit nach 500 h, 120 °C, DIN 54001 | | 5 |
| Extrahierbare Bestandteile 16 h, Äther | Gew.% Verl. | 4,0 |
| Extrahierbare Bestandteile nach 7 Tg. 120°C 16 h Äther | −"− % | 4,4 |
| Extrahierbare Bestandteile nach 500 h Xenon 16 h Äther | −"− % | 3,6 |

0213254

Patentansprüche:

1. Verfahren zur Herstellung eines tiefgezogenen Formteiles aus teilkristallinen Werkstoffen, bei dem der
Werkstoff in die Gestalt einer Folie überführt wird
und nach der Erwärmung auf eine Temperatur unterhalb
des Kristallit-Schmelzpunktes mit einer Oberflächenprägung versehen und anschließend tiefgezogen wird,
dadurch gekennzeichnet, daß der geprägte Werkstoff
abgekühlt, vernetzt und nach einer erneuten Erwärmung auf eine Temperatur oberhalb des Kristallit-
Schmelzpunktes tiefgezogen wird.

2. Verfahren nach Anspruch 1, dadurch gekennzeichnet,
daß die Vernetzung durch energiereiche Strahlen bewirkt wird, insbesondere durch beschleunigte Elektronen.

3. Verfahren nach Anspruch 2, dadurch gekennzeichnet,
daß die Vernetzung durch eine Bestrahlung der Folie
mit einer Leistung von 40 bis 80 kGy vorgenommen wird.

4. Werkstoff zur Erzeugung eines tiefgezogenen Formteiles nach Anspruch 1 bis 3, dadurch gekennzeichnet,
daß der teilkristalline Werkstoff als Grundsubstanz
einen überwiegenden Gehalt aus einem Ethylen-Propylen-copolymeren Werkstoff oder einem Ethylen-
Propylen-Dien-Mischpolymerisat aufweist.

5. Werkstoff nach Anspruch 4, dadurch gekennzeichnet,
daß der Werkstoff neben der Grundsubstanz einen
Gehalt eines gleichmäßig eingemischten, elastifizierenden polymeren Werkstoffes enthält, der strahlenvernetzbar ist.

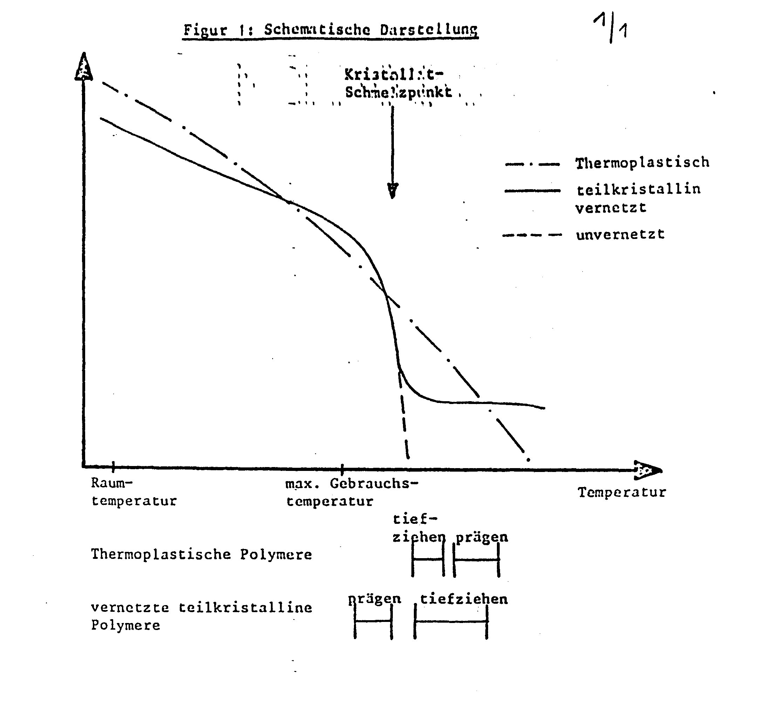

Figur 1: Schematische Darstellung

Kristallit-
Schmelzpunkt

—·—  Thermoplastisch

———  teilkristallin
     vernetzt

— — —  unvernetzt

Raumtemperatur

max. Gebrauchstemperatur

Temperatur

tiefziehen  prägen

Thermoplastische Polymere

vernetzte teilkristalline
Polymere

prägen  tiefziehen